**Europäisches Patentamt**

**European Patent Office**

**Office européen des brevets**

(11) Veröffentlichungsnummer : **0 334 122 B1**

(19)

(12) **EUROPÄISCHE PATENTSCHRIFT**

(45) Veröffentlichungstag der Patentschrift :
**04.03.92 Patentblatt 92/10**

(21) Anmeldenummer : **89104269.9**

(22) Anmeldetag : **10.03.89**

(51) Int. Cl.⁵ : **A01G 9/10**

(54) **Behälter zur Aufnahme des Wurzelballens von Pflanzen.**

(30) Priorität : **23.03.88 DE 3809697**
**08.12.88 DE 8815259 U**

(43) Veröffentlichungstag der Anmeldung :
**27.09.89 Patentblatt 89/39**

(45) Bekanntmachung des Hinweises auf die
Patenterteilung :
**04.03.92 Patentblatt 92/10**

(84) Benannte Vertragsstaaten :
**AT BE CH DE ES FR GB IT LI NL SE**

(56) Entgegenhaltungen :
**DE-B- 1 298 440**

(56) Entgegenhaltungen :
**FR-A- 999 480**
**FR-A- 1 197 267**
**FR-A- 2 214 285**
**US-A- 2 594 307**

(73) Patentinhaber : **Prein, Franz**
**Lavesumer Strasse 3 c**
**W-4358 Haltern (DE)**

(72) Erfinder : **Prein, Franz**
**Lavesumer Strasse 3 c**
**W-4358 Haltern (DE)**

(74) Vertreter : **Schulze Horn, Stefan, Dipl.-Ing.
M.Sc.**
**Goldstrasse 36**
**W-4400 Münster (DE)**

**EP 0 334 122 B1**

Anmerkung : Innerhalb von neun Monaten nach der Bekanntmachung des Hinweises auf die Erteilung des europäischen Patents kann jedermann beim Europäischen Patentamt gegen das erteilte europä-ische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patent-übereinkommen).

Jouve, 18, rue Saint-Denis, 75001 PARIS

**Beschreibung**

Die Erfindung betrifft einen Behälter zur Aufnahme des Wurzelballens von Pflanzen mit entlang einer Trennlinie an den Seitenwandungen vorgesehenen, eine Trennung in zwei Teilstücke erlaubenden Verbindungsmitteln, die als eine formschlüssige Verbindung der Teilstücke erlaubende, ineinanderfassende Nut und Federelemente ausgestaltet sind.

Ein derartiger Behälter ist aus der US-A-2 594 307 bekannt. Diese beschreibt und zeigt einen Tontopf, dessen Hälften mit einer Ringfeder zusammengehalten werden und dessen Boden durch eine extra, auf den Rändern der Topfhälften aufliegende Scheibe gebildet wird.

Nachteilig ist bei diesem Topf oder Behälter, daß z.B. die Ringfeder oder die gesonderte Scheibe leicht verloren gehen können, daß das Zusammensetzen und Auseinandernehmen des Topfes kompliziert und mit einem erheblichen Aufwand von manueller Arbeit verbunden ist und die Herstellung der vier Teile des Topfes weiterhin kostenaufwendig ist.

Aus der DE-A-1 298 440 ist weiterhin eine Holzkiste bekannt, die aus miteinander verrastenden Schiebeelementen besteht. Diese Holzkiste ist aber nicht dafür geeignet, Pflanzenballen aufzunehmen und vielmals zusammengesetzt oder auseinandergenommen zu werden. Ihr Aufbau und damit ihre Herstellung ist kompliziert und kostenaufwendig, so daß billige Artikel wie Blumentöpfe oder Töpfe für Pfanzenballen ganz allgemeiner Art so nicht aufgebaut sein können.

Es ist demgegenüber Aufgabe der Erfindung, einen Behälter zur Aufnahme des Wurzelballens von Pflanzen so ausgestalten, daß er leicht auseinandernehmbar und zusammenfügbar ist, daß er wirtschaftlich hergestellt werden kann und daß ein Verlust von Topf-Einzelteilen in zerlegtem Zustand nicht möglich ist. Diese Aufgabe wird bei dem eingangs genannten Behälter erfindungsgemäß dadurch gelöst, daß der Behälter aus Kunststoff besteht, die Trennlinie auch den Behälterboden teilt und die Verbindungsmittel an den Verbindungsstellen der Behälter-Teilstücke ein klemmendes Ineinandergreifen gestattende Vorsprünge aufweisen.

Weitere vorteilhafte Ausgestaltungen des erfindungsgemäßen Behälters sind in den Unteransprüchen 2 bis 4 angegeben.

Im folgenden wird ein Ausführungsbeispiel der Erfindung in der Zeichnung dargestellt und näher beschrieben. Es zeigen:

Figur 1 einen erfindungsgemäßen Behälter in Seitenansicht,

Figur 2 einen Querschnitt durch ein erfindungsgemäßes Verbindungsdetail,

Figur 3 einen Querschnitt durch eine Behälterhälfte.

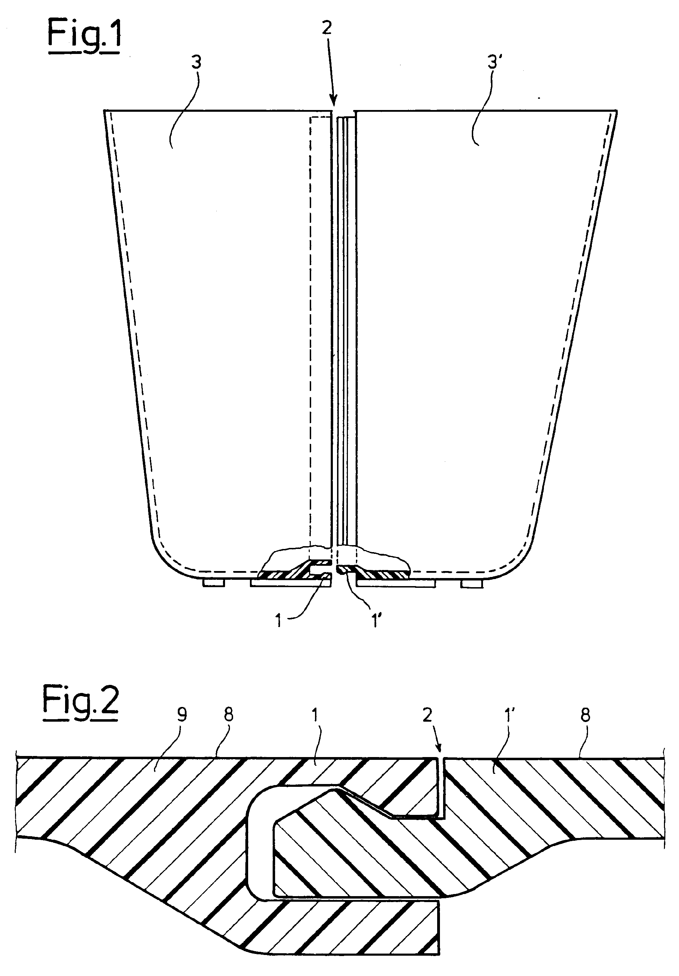

Der in Figur 1 dargestellte erfindungsgemäße Behälter zur Aufnahme des Wurzelballens von Pflanzen besteht aus zwei identischen Teilstücken 3 und 3', die entlang einer mittig links durch Behälter-Seitenwandung und Behälter-Boden verlaufenden Trennlinie, mittels einander entsprechender Nut 4- und Feder 5-Elemente ausgestattet entlang dieser Linie getrennt bzw. zusammengesetzt werden können. Die erfindungsgemäßen Nut- und Federelemente weisen die Besonderheit auf, daß sie an ihrer Oberfläche mit Vorsprüngen 6 und 7 versehen sind, die ineinander eingreifbar ausgestaltet sind und die durch diese eine Klemmverbindung herstellen, die dem Druck des sich durch Wachstum der Pflanze ausdehnenden Wurzelballens einen hinreichenden Widerstand bietet.

Dadurch, daß diese Verbindungselemente entlang der gesamten Trennlinie sowohl in der Seitenwand als auch im Boden beider Hälften verlaufen und einander entsprechende Ausführung dergestalt aufweisen, daß eine Behälterhälfte jeweils in der einen Seitenwand und der bis zum Abflußloch reichenden Hälfte des Bodens eine Nut, in der zweiten Hälfte dieses Behältersegments eine Feder aufweist, können die einander entsprechenden Behälterhälften in nur einer einzigen Form und damit besonders kostengünstig hergestellt werden.

In Figur 2 ist in Vergrößerung ein Verbindungsdetail dargestellt, wie es zwei Behälterhälften an ihren Seitenwandungen wie auch im Bodenbereich verbindet. Dabei sind die Verbindungsstellen so als Nut 4 und Feder 5 ausgebildet, daß die an diesen vorgesehenen Vorsprünge 6 und 7 eine klemmende Verbindung beider Hälften ermöglichen. Dabei bilden die nach außen gewandten Oberflächen der Behälterhälften auch im Verbindungsbereich eine ebene Fläche.

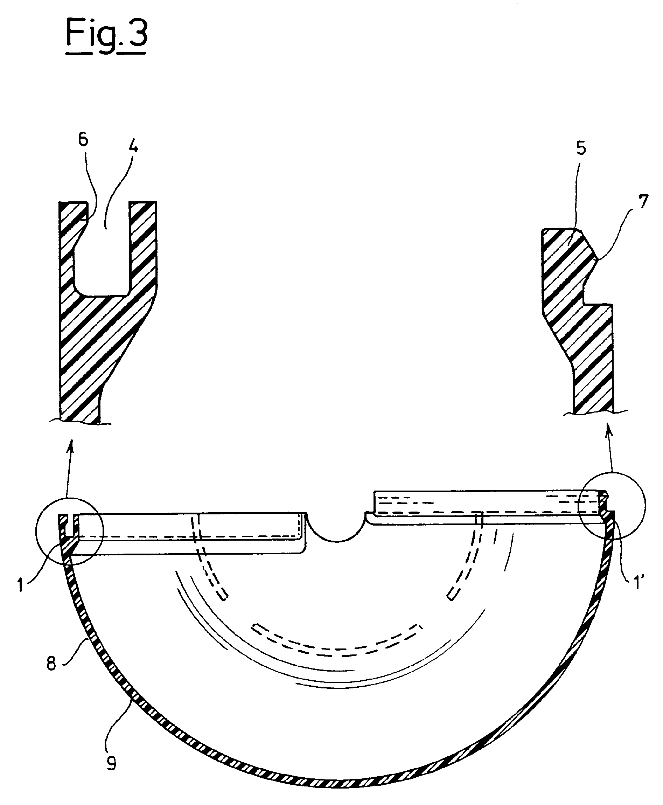

Aus der Darstellung in Figur 3 ist ersichtlich, daß eine Behälterhälfte jeweils an ihrer einen Seitenwand sowie der dazugehörigen Hälfte des Bodenbereiches bis zur Entwässerungsöffnung in der Mitte eine Kantenausführung als Nut, in dem anderen Teil eine als Feder ausgebildete Kante aufweist.

Durch diese Konstruktionsweise ist es möglich, zwei identische, auf einer einzigen Maschine herstellbare Hälften, zu einem erfindungsgemäßen Behälter zusammenzusetzen. Zur Herstellung eines erfindungsgemäßen Behälters wird die Verwendung von Kunststoff bevorzugt, da Keramik oder Glas wegen der besonderen Konstruktion von Nut- und Federelement im Verbindungsbereich den bei dem Zusammenfügen der Behälterhälften auftretenden Spannungen nicht widerstehen. Als weiterer Vorteil kommt hinzu, daß wegen der Wiederverwendbarkeit der Behälter eine Verringerung der Abfallmenge erreicht wird, so daß man wegen der insgesamt erreichten erhöhten Wirtschaftlichkeit von einer idealen Lösung der anstehenden Probleme sprechen kann.

**Patentansprüche**

1. Behälter zur Aufnahme des Wurzelballens von Pflanzen mit entlang einer Trennlinie an den Seitenwandungen vorgesehenen, eine Trennung in zwei Teilstücke (3, 3′) erlaubenden Verbindungsmitteln (1, 1′), die als eine formschlüssige Verbindung der Teilstücke erlaubende, ineinanderfassende Nut (4) und Federelemente (5) ausgestaltet sind, **dadurch gekennzeichnet,** daß der Behälter aus Kunststoff besteht, die Trennlinie auch den Behälterboden teilt und die Verbindungsmittel (1, 1′) an den Verbindungsstellen (2) der Behälter-Teilstücke (3, 3′) ein klemmendes Ineinandergreifen gestattende Vorsprünge (6, 7) aufweisen.

2. Behälter nach Anspruch 1, dadurch gekennzeichnet, daß der Vorsprung (6) im Nut-Element (4) zum Nut-Inneren hinweisend ausgestaltet ist.

3. Behälter nach Anspruch 1, dadurch gekennzeichnet, daß der Vorsprung (7) des Feder-Elementes (5) von der Federoberfläche nach außen hinweisend gestaltet ist.

4. Behälter nach einem der Ansprüche 1 bis 3, dadurch gekennzeichnet, daß die Nut- und Feder-Elemente eine mit den Behälterwandungen (9) fest verbundene, zu deren äußerer Oberfläche (8) hin eine ebene Fläche bildende Ausgestaltung aufweisen.

**Claims**

1. Container for a plant root ball, which, along a dividing line around the side walls of which container, is furnished with a means of juncture (1, 1′), which allow the unit to be divided into two parts (3, 3′). The said means of juncture comprises interlocking tongue (4) arid groove units (5), which allow a form-locking joining of the parts, characterized in that the said container consists of plastic, the said dividing line also separates along the bottom of the container and the said means of juncture (1, 1′) at the points of juncture (2) of the two parts of the container (3, 3′) feature projections (6, 7) which allow a tight-fitting interlocking of the parts.

2. Container according to patent claim 1, characterized in that the said projection (6) in the said groove unit (4) is shaped so that protruding part bulges at its locking end towards the inside of the said groove.

3. Container according to claim 1, characterized in that the said projection (7) of the said tongue unit (5) bulges at its locking end outwards from the surface of the said tongue.

4. Container according to the claims 1 to 3, characterized in that locked together, the outer surfaces of the said groove and tongue units form an even, flat surface that merges completely with the outer surface (8) of the container walls (9).

**Revendications**

1. Récipient pour recevoir la motte adhérence aux racines de plantes, comprenant des moyens d'assemblage (1, 1′) qui sont prévus le long d'une ligne de séparation sur les parois latérales, permettent une séparation en deux morceaux (3, 3′) et sont réalisés sous forme d'encoche (4) et d'élément à ressort (5) s'engageant l'un dans l'autre et permettant un assemblage par complémentarité de formes des morceaux, caractérisé et ce que le récipient est en matière plastique, la ligne de séparation divise également le fond du récipient et les moyens d'assemblage (1, 1′) présentent au niveau des points d'assemblage (2) des morceaux (3, 3′) du récipient des saillies (6, 7) permettant un engagement des deux pièces l'une dans l'autre avec blocage.

2. Récipient selon la revendication 1, caractérisé en ce que la saillie (6) de l'encoche (4) est orientée vers l'intérieur de ladite encoche.

3. Récipient selon la revendication 1, caractérisé en ce que la saillie (7) de l'élément à ressort (5) s'éloigne vers l'extérieur à partir de la surface dudit élément.

4. Récipient selon l'une des revendications 1 à 3, caractérisé en ce que l'encoche et l'élément à ressort présentent une configuration qui est reliée de manière fixe aux parois (9) du récipient et forme une surface plane en direction de leur surface extérieure (8).

Fig.1

Fig.2

# Fig.3